# EUROPEAN PATENT SPECIFICATION

(11) **EP 2 266 497 B1**
(45) Date of publication and mention of the grant of the patent: **28.09.2016**
(21) Application number: 10166930.7
(22) Date of filing: 22.06.2010
(51) Int. Cl.: A61C 7/20, A61C 7/28

(54) **Orthodontic bracket**
Orthodontische Klammer
Support orthodontique

(30) Priority: 23.06.2009 JP 2009149185; 01.12.2009 EP 09177616
(43) Date of publication of application: 29.12.2010
(73) Proprietor: Scuzzo, Giuseppe, 00122 Ostia Lido, RM (IT); Takemoto, Kyoto, Chiyoda Tokyo 102-0074 (JP)
(72) Inventor: Takemoto, Kyoto, Tokyo 102-0074 (JP)
(74) Representative: Papa, Elisabetta

(56) References cited:
- EP-A2- 0 714 639
- WO-A2-2008/031060
- WO-A2-2009/057937
- US-A- 5 160 261
- US-A- 5 906 486
- US-B1- 7 329 120

## Description

### FIELD OF THE INVENTION

The present invention relates to an orthodontic bracket attached to a tooth to correct teeth alignment.

### PRIOR ART

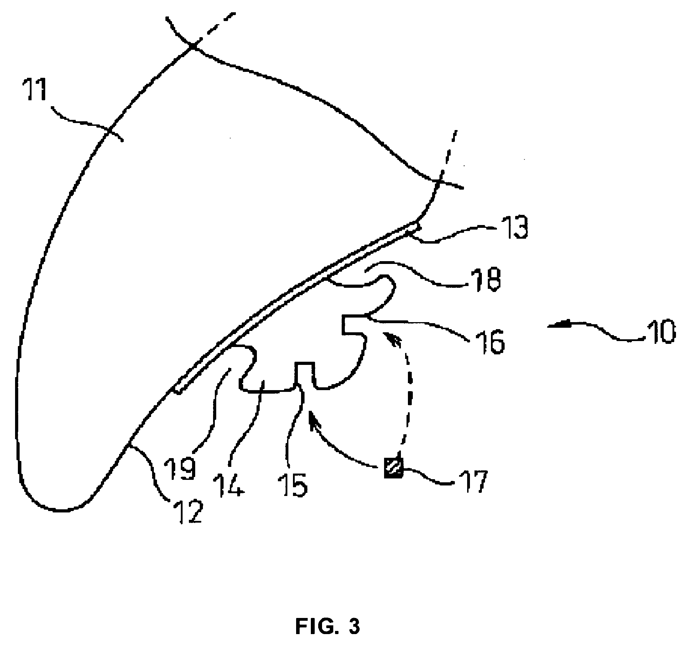

In recent orthodontics, orthodontic brackets attached to teeth and a wire attached to the brackets have been disposed on the inner side of the teeth, that is, on the lingual side, from an aesthetic point of view (for example, refer to Japanese Examined Utility Model Application Publication No. 57-44967 and United States Patent No. 4,337,037). For example, Fig. 3 illustrates a prior art orthodontic bracket 10. The orthodontic bracket 10 includes a plate-shaped pad 13 glued to a surface 12 of a tooth 11 that is on the lingual side (inner side) and a bracket body 14 integrated with the pad 13 by brazing or any other suitable method in such a way that the bracket body 14 stands erect from the pad 13, as shown in Fig. 3.

The bracket body 14 has a portion that looks like three fingers, which forms a main slot 15 and a sub-slot 16, the main slot 15 opening vertically downward (when the orthodontic bracket 10 is used in the maxilla) or vertically upward (when the orthodontic bracket 10 is used in the mandible) in a state in which the orthodontic bracket 10 is attached to the lingual surface of a tooth, the sub-slot 16 opening horizontally toward the lingua when the orthodontic bracket 10 is attached as described above. A metal wire 17 made of, for example, an alloy and having a rectangular or any other suitable cross-sectional shape is then inserted into the slot 15 or 16.

The intrinsic elasticity of the wire 17 produces a bending force, a tension, or any other force as a restoring force that serves as a corrective force or moment acting on the tooth 11, which deviates from a normal dental arc or is skewed incorrectly, and the force or moment shifts or rotates the tooth 11 over time to a position on the normal dental arc. Further, undercut portions 18 and 19 formed as upper and lower gaps between the bracket body 14 and the pad 13 are used to catch a thin wire, a rubber band, or any other suitable fastener for ligating and securing the wire 17 inserted into the main slot 15 (or the sub-slot 16) to the orthodontic bracket 10.

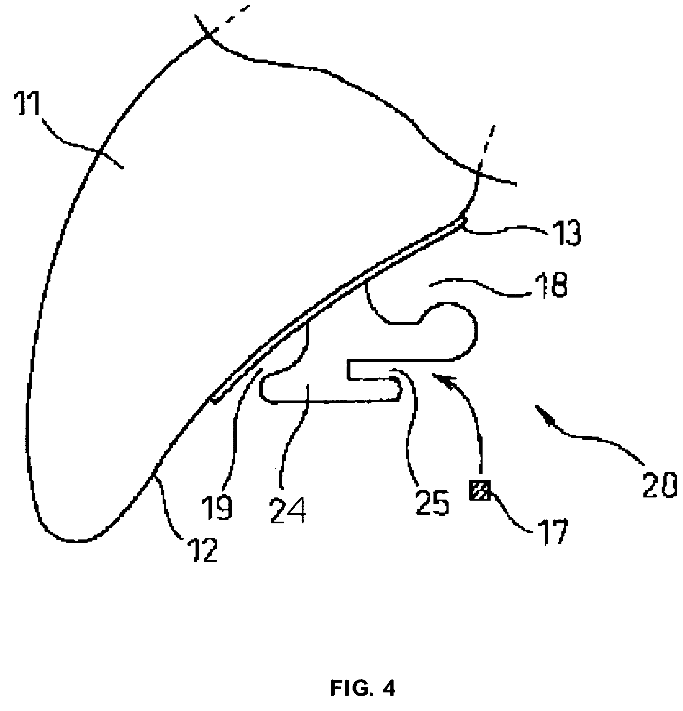

Fig. 4 shows another prior art orthodontic bracket 20. The orthodontic bracket 20 includes a pad 13 similar to the pad used in the orthodontic bracket 10 shown in Fig. 3, and a bracket body 24 integrated with the pad 13 has a main slot 25 opening horizontally toward the lingua in a state in which the orthodontic bracket 20 is attached to a tooth, as shown in Fig. 4. Further, as in the orthodontic bracket 10 shown in Fig. 3, upper and lower undercut portions 18 and 19 are formed between the bracket body 24 and the pad 13, and at least one of the undercut portions can be used to ligate and secure a wire 17, which is inserted in a predetermined position in the main slot 25.

When any of the orthodontic brackets of related art described above is used to perform lingual orthodontics, it has been pointed out that the ligation is a cumbersome task. In particular, an orthodontic bracket used in the maxilla and having a large anterior tooth torque does not provide a force large enough to press the wire to the bottom of the slot, and a single tie results in poor ligation. In this case, ligation using double over tie, which is more cumbersome, has been used. When a small-sized orthodontic bracket is used, since the width of the slot is narrow and the depth thereof is shallow, it is important to perform ligation very carefully in order to reliably press the wire into the slot. If the ligation is loose, the play between the slot and the wire is large, which adversely affects rotation and torque control.

An orthodontic bracket having a horizontally oriented slot is problematic, for example, in that loose ligation may not allow improvement in rotation or may cause the wire to disengage from the slot during anterior retraction, resulting in torque control failure. On the other hand, when an orthodontic bracket having a vertically oriented slot is used, loose ligation may not allow tipping or height control or may not allow sufficient torque control as well. As a result, in both the horizontally and vertically oriented slots, loose ligation prevents reliable three-dimensional tooth control. On the other hand, tight ligation that allows the wire to be securely pressed against the bottom of the slot may increase the friction between the wire and the ligation wire, preventing smooth tooth motion.

Documents WO 2008/031060 and US 5,160,261 disclose additional types of prior art orthodontic brackets.

WO 2008/031060 discloses a reduced-friction buccal tube and a method of use. Said buccal tube presents at least a passageway adapted for receiving an archwire, said passageway comprising a plurality of projections for reducing friction between the buccal tube and the archwire inserted within it.

US5160261 discloses an edgewise orthodontic double bracket comprising notches on the edge of wing tips for supportive engagement of a ligature, which allow to reduce undesired friction between the bracket and the archwire.

### DISCLOSURE OF THE INVENTION

To solve the problems described above, an object of the invention is to provide an orthodontic bracket that does not rely on how an operator is skilled in ligation and can minimize the friction.

A first aspect of the invention is an orthodontic bracket attached to a tooth to correct the row of teeth, the orthodontic bracket comprising a slot having an opening into which a wire can be inserted in the vertical direction, and a shutter that can slide to block or unblock the opening. The wire is placed in the slot by causing the shutter to slide and unblock the opening, inserting the wire through the opening, and causing the shutter to slide and block the opening. Further, the slot has a square cross-sectional shape or a rectangle cross-sectional shape having a short side and a long side.

According to a second aspect of the present invention, the ratio of a length of a short side to a length of a long side of the slot with rectangle cross-sectional shape is more than 1.0 to not more than 1.1. Thereby, the play between the wire and the slot in the horizontal direction can approximately be the same as that in the vertical direction.

According to a third aspect of the invention, the length of the slot ranges from 1.0 to 2.0 mm or from 1.0 to 3.0 mm.

According to a fourth aspect of the invention, a position of the center of the slot is determined in such a way that the ratio of the distance from the crown lower end to the crown height ranges from 0.1 to 0.5 when the orthodontic bracket is attached to the lingual side of a tooth, or from 0.3 to 0.7 when the orthogenetic bracket is attached to a labial side of a tooth.

In accordance with a fifth aspect of the present invention, there is provided an orthodontic bracket for correcting a row of teeth. The orthodontic bracket includes a slot through which an orthodontic wire can be placed. The slot has a square cross-sectional shape or a rectangle cross-sectional shape whose ratio of a length of a short side to a length of a long side of the rectangle is more than 1.0 to not more than 1.1. A length of the slot ranges from 1.0 to 2.0 mm or from 1.0 to 3.0 mm. Therefore, a new orthodontic bracket can be attained.

Furthermore, according to a sixth aspect of the present invention, a distance from a center of the slot to a bottom surface of the pad ranges from 0.5 to 1.5 mm when the orthodontic bracket is attached to a lingual side of a tooth, or from 0.5 to 2.0 mm when the orthogenetic bracket is attached to a labial side of a tooth. Therefore, a new orthodontic bracket can be attained.

Moreover, according to a seventh aspect of the present invention, a vertical difference of a center of the slot and an edge point of a gingival side of the bottom surface of the pad ranges from 0.5 to 1.5 mm. Therefore, a new orthodontic bracket can be attained.

Further, according to a eighth aspect of the present invention, a rotation play, a tipping play and a torque play of the orthodontic bracket are respectively controlled to be not more than 5°. Therefore, a new orthodontic bracket can be attained.

According to the first aspect of the invention, the wire will not disengage from the slot, whereby the torque control can be reliably performed. Further, it is not necessary to perform ligation that causes the wire to be securely pressed against the bottom of the slot. Since the ligation is not tight, the tooth in question can be smoothly shifted.

According to the second aspect of the invention, the play between the wire and the slot in the horizontal direction can be the same as that in the vertical direction.

According to the third aspect of the invention, an optimum corrective force and moment can be obtained.

According to the fourth aspect of the invention, it is possible to use a wire having a straight configuration including a simple, smooth curve, such as an arc, and straight lines connected to both ends of the curve.

### BRIEF DESCRIPTION OF THE DRAWINGS

Figs. 1A, 1B, and 1C are a plan view, a side view, and a bottom view of an orthodontic bracket according to an embodiment of the invention;
Fig. 2 is a plan view of a wire useable with the orthodontic bracket shown in Figs. 1A to 1C;
Fig. 3 is a side view of an orthodontic bracket of related art; and
Fig. 4 is a side view of another orthodontic bracket of related art.

### BEST MODE FOR CARRYING OUT THE INVENTION

An embodiment of the invention will be described below with reference to the drawings. It is however noted that the invention can be implemented in a variety of different aspects and is not limited to the embodiment described below. In the present specification, the portions having the same or similar functions have the same reference characters and no redundant description thereof will be made.

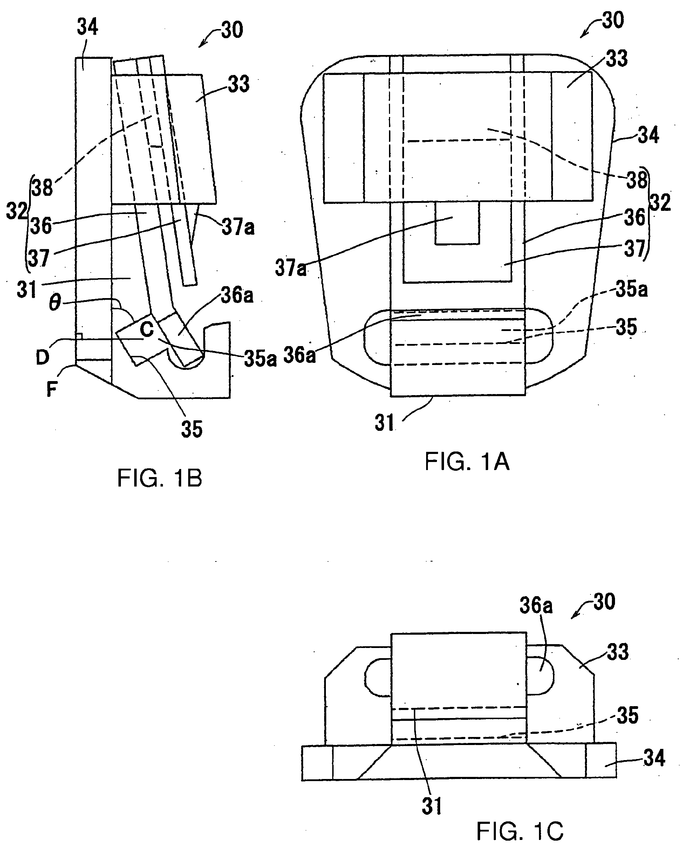

Figs. 1A, 1B, and 1C are a plan view, a side view, and a bottom view of an orthodontic bracket according to the embodiment of the invention, respectively. The orthodontic bracket 30 includes a bracket body 31, a shutter 32, a shutter holder 33, and a pad 34.

The bracket body 31 has a slot 35 formed therein, to which a wire 40, which will be described later, is attached. The slot 35 has a square cross-sectional shape and has a short length. The slot 35 has an opening 35a into which the wire can be inserted perpendicular to a bite plane (referred to as "vertical direction" hereinafter). On the other hand, a slot of an orthodontic bracket of related art has a rectangular cross-sectional shape. When a thin, round wire is used to perform leveling, in particular, the play between the slot and the wire, which are parallel to a bite plane (referred to as "horizontal direction" hereinafter), is large, and hence sufficient improvement in rotation often cannot be made. To mitigate the problem, the slot 35 of the orthodontic bracket 30 of the present embodiment has a square cross-sectional shape and has a short length (a length of the slot 35 in lateral direction in Fig. 1A) so that three-dimensional control including rotation control, tipping control, and torque control can be performed with low friction.

The play between the slot 35 and the wire 40 in the horizontal direction is the same as that in the vertical direction, which is significantly advantageous in improving the rotation control, tipping control, and torque control, as compared to a rectangular slot of related art.

The length of one side of the square cross-sectional shape of the slot preferably ranges from 0.3556 to 0.4826 mm (from 0.014 to 0.019 inches). When the length of one side is within this range, an optimum corrective force and moment can be obtained by adjusting the length of the slot, the distance between the brackets, the size of the wire, and other parameters.

The length of the slot 35 can be, for example, 1.5 mm when the orthodontic bracket 30 is used in the maxilla, whereas it can be 1.3 mm when used in the mandible.

It is however noted that the length of the slot is not limited to the values described above. The length of the slot 35 preferably ranges from 1.0 to 2.0 mm. When the length of the slot is within this range, an optimum corrective force and moment can be obtained by adjusting the length of one side of the square cross-sectional shape of the slot, the distance between the brackets, the size of the wire, and other parameters.

As described above, the length of the slot of the orthodontic bracket of the present embodiment can be shorter than the length of the slot of an orthodontic bracket of related art.

Since the length of the slot of the orthodontic bracket of the present embodiment is shorter than the length of the slot of an orthodontic bracket of related art, the following advantages are provided: That is, reducing the length of the slot allows the distance of a wire exposed between adjacent brackets (referred as "a distance of a wire between adjacent brackets" hereinafter) between adjacent brackets to be increased. A large distance between adjacent brackets prevents the wire from being plastically deformed due to a large magnitude of stress acting thereon. No plastic deformation results in no increase in friction. Moreover, a corrective force based on a wire deformation can be suppressed small and an excessive force on a tooth can be prevented. Therefore, a comfort of a patient increases.

The torque θ of the slot 35 shown in Fig. 1B preferably ranges from 40 to 70 degrees. When the torque θ of the slot is within this range, the orthodontic bracket 30 can be attached to a tooth in accordance with the form thereof.

The slot 35 is formed in the bracket body 31 in such a way that the opening 35a of the slot 35 is oriented in a substantially vertical direction, whereby the wire 40 is readily placed in the slot 35 and at the same time the wire 40 is readily bent in this process.

In Fig. 1B, the slot 35 is positioned in a lower portion of the orthodontic bracket 30. The orthodontic bracket 30 is attached to a tooth in such a way that the slot 35 is positioned on the labial side.

The vertical position of the centroid of the square cross-sectional shape of the slot 35 is now defined as the "position of the center of the slot." The ratio of the distance from the lower end of the crown of the tooth to the height of the crown is further defined as the "ratio of the distance from the crown lower end to the crown height." The position of the center of the slot is preferably determined in such a way that the ratio of the distance from the crown lower end to the crown height ranges from 0.1 to 0.5. When the position of the center of the slot is determined this way, a wire having a "straight configuration" formed of a simple, smooth curve, such as an arc, and straight lines connected to both ends of the curve can be advantageously used.

The shutter 32 is attached to the bracket body 31 via the shutter holder 33 so that the shutter 32 slides to block or unblock the opening 35a of the slot 35. The shutter 32 includes a rectangular plate-shaped shutter body 36, a rectangular plate-shaped stopper 37, and a rectangular plate-shaped spacer 38. A lid 36a that blocks or unblocks the opening 35a of the slot 35 is formed at the lower end of the shutter body 36. A tab 37a is formed at the lower end of the stopper 37 so that the shutter 32 does not disengage from the shutter holder 33.

The shutter body 36 and the stopper 37 are overlaid with the spacer 38 interposed therebetween at the upper end thereof and joined with each other. The shutter holder 33 has a U-like cross-sectional shape; the upper end of the shutter 32 is inserted into the U-shaped portion, and both ends of the U-shaped portion are joined with the pad 34. When the lid 36a of the shutter body 36 blocks the opening 35a of the slot 35, the tab 37a of the stopper 37 abuts the shutter holder 33 and hence the shutter 32 does not disengage from the shutter holder 33. In this way, the lid 36a is reliably secured to cover the opening 35a of the slot 35, and serves as a sturdy inner wall of the slot 35. Pressing the lower end of the stopper 37 toward the shutter body 36 so that the stopper 37 is bent and lifting the lower end of the stopper 37 cause the tab 37a of the stopper 37 to enter the U-shaped portion of the shutter holder 33. Since the shutter 32 can thus be lifted, the lid 36a of the shutter body 36 unblocks the opening 35a of the slot 35.

With respect to the orthodontic bracket of the present invention, the shutter 32 is securely fixed onto the opening of the slot 35 and a solid inner wall of the slot 35 can be formed. Therefore, the orthodontic bracket of the present invention does not need to have a wing just as the conventional orthodontic bracket does. Thus, the orthodontic bracket of the present invention can be formed into a small and thin orthodontic bracket. As a result, a comfort of a patient can be increased. When torque control is performed, the thus configured slot 35 does not allow the wire 40 to disengage from the slot 35 during anterior retraction. Therefore, even when the wire 40 has a square cross-sectional shape, the play in the torque is small and the torque control can be sufficiently performed. Among others, since the low friction provides a smaller, continuous corrective force, smooth tooth motion is likely achieved. Further, since the smaller force provides a sufficient corrective force, the pain that the patient may feel at the tooth under orthodontic treatment is likely reduced.

The pad 34 has a rectangular plate shape and is integrated with the bottom of the bracket body 31 by brazing or any other suitable method. The pad 34 is glued or otherwise attached to the lingual-side surface of a tooth. Since the pad 34 is thin and attached to a portion close to the gingiva, even when the orthodontic bracket 30 is attached to an anterior tooth in the maxilla and faces the tip of an anterior tooth in the mandible, the tip of the anterior tooth in the mandible does not tend to hit the orthodontic bracket 30. Therefore, since the orthodontic bracket 30 will not come into contact with the tip of any anterior tooth in the mandible, no gap will be formed between upper and lower molar teeth, whereby there is no risk of root resorption at the anterior tooth. It is noted that when the pad 34 is glued onto the lingual-side surface of a tooth, any indentation in the surface of the tooth can be filled with an adhesive or the angle of the surface of the pad 34 to the surface of the tooth can be delicately adjusted by using an adhesive.

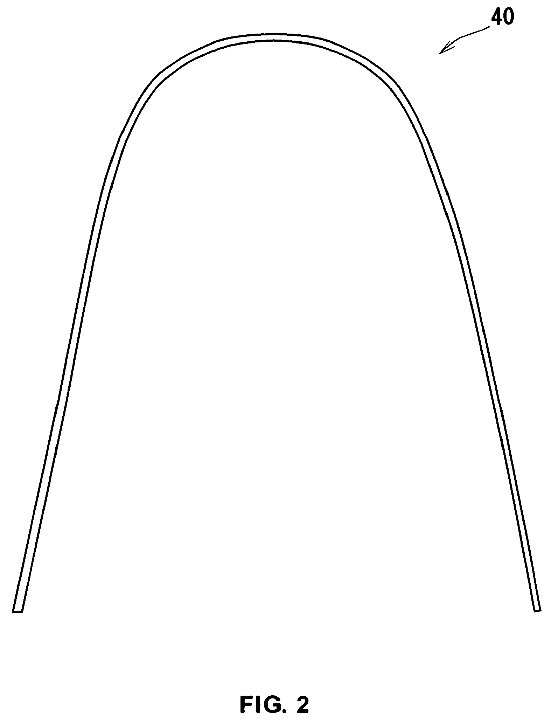

The wire 40 is a straight, arch-shaped wire smoothly curved at a large radius of curvature but having no sharply bent portion, and requires almost no additional bending force to produce plastic deformation. The wire 40 has a straight configuration formed of a simple, smooth curve, such as an arc, and straight lines connected to both ends of the curve without any step between the curve and the straight lines, has no bent portion through plastic deformation, and rests entirely in a horizontal plane when the wire 40 is not biased, as shown in Fig. 2. When the wire 40 is attached to a tooth to be corrected, the wire 40 is deformed within its elasticity limit (when a wire made of a shape memory alloy is used, the wire is deformed within its super-elasticity limit) and inserted into the slot 35 of the orthodontic bracket 30. The elastic force of the wire 40 then produces a corrective force or moment acting on the tooth via the orthodontic bracket 30.

Since the thus configured wire 40 does not need any plastically deformed, bent portion in advance, the wire 40 can be readily produced and industrially manufactured in volume, providing a significant advantage of cost reduction. Further, when the position of the wire 40 is shifted and adjusted relative to the orthodontic bracket 30 in the course of orthodontic treatment, no cumbersome operations, such as re-bending any bent portion and re-ligation, are necessary, unlike a mushroom-shaped archwire of related art, whereby the sliding adjustment of the wire 40 is very readily carried out. Therefore, the burdens on both the operator and patient are reduced, and individual difference among the operators is relatively reduced. Further, the fact that it is not basically necessary to bend the wire 40 so that the shape thereof conforms to the dental arch of each individual patient is significantly advantageous in that it is possible to use a material that more flexibly undergoes super-elastic deformation than a wire of related art but is extremely difficult to be bent through plastic deformation, such as a shape memory alloy made of nickel, titanium, copper, or other elements.

When the orthodontic bracket of the present embodiment was used in treatment, the chair time and treatment time were shortened, and shifting a tooth, such as tipping control and rotation control, was reliably performed in a short period. Specifically, the period was reduced by 10 to 40% as compared to a case where an orthodontic bracket of related art was used.

While the orthodontic bracket of the present embodiment has been described with reference to the case where it is attached to the lingual side of a tooth, the orthodontic bracket of the present embodiment can be attached to the labial side of a tooth.

In case when the orthodontic bracket is attached to the labial side of the tooth, the length of one side of the square cross-sectional shape of the slot preferably ranges from 0.3810 to 0.5588 mm (from 0.015 to 0.022 inches). When the length of one side is within this range, an optimum corrective force and moment can be obtained by adjusting the length of the slot, the distance between the brackets, the size of the wire, and other parameters.

When the orthodontic bracket 30 is attached to the labial side, the length of the slot 35 preferably ranges from 1.0 to 3.0 mm. Furthermore, it is more preferable when the length of the slot 35 ranges from 1.0 to 2.0 mm. When the length of the slot is within the range of 1.0 to 3.0 mm, an optimum corrective force and moment can be obtained by adjusting the length of one side of the square cross-sectional shape of the slot, the distance between the brackets, the size of the wire, and other parameters. When the length of the slot 35 is within the range of 1.0 to 2.0 mm, the effect becomes more remarkable.

When the orthodontic bracket is attached to the labial side, the torque θ of the slot 35 preferably ranges from -20 to 30 degrees. When the torque θ of the slot is within this range, the orthodontic bracket 30 can be attached to a tooth in accordance with the form thereof.

When the orthodontic bracket is attached to the labial side, the position of the center of the slot is preferably determined in such a way that the ratio of the distance from the crown lower end to the crown height ranges from 0.3 to 0.7.

With respect to the above-mentioned orthodontic bracket, a shutter 32 that can slide to block or unblock the opening has been described as a method of blocking and unblocking the opening of the slot. However, the shutter 32 is not limited to the shutter 32 that can slide to block or unblock the opening of the slot

Further, as the other method of blocking and unblocking the opening of the slot, a hinge cap can be employed. It is preferable that the hinge cap resists the reactive force of the orthodontic wire and is securely fixed into the opening of the slot. In this way, a solid inner wall of the slot can be formed and the orthodontic wire does not slip out of the slot. Thus, a rotation control, a tipping control and a torque control can securely be performed.

With respect to the above-mentioned orthodontic bracket, a slot having the opening into which an orthodontic wire 40 can be inserted in a vertical direction has been described above. However, the slot is not limited to a slot having an opening into which an orthodontic wire can be inserted in vertical direction.

Further, a slot may have an opening into which an orthodontic wire can be inserted from the other direction, such as a horizontal direction. The process of placing the orthodontic wire in the slot becomes simple by arbitrarily changing the orientation of the opening of the slot corresponding to the work environment. Also the process of arching the orthodontic wire is simplified.

With respect to the above-mentioned orthodontic bracket, a slot with square cross-sectional shape has been described above. However, the slot is not limited to a square cross-sectional shape. Further, the slot can have a rectangle cross-sectional shape as long as the rectangle cross-sectional shape is within the predetermined range.

In case when attaching the orthodontic bracket on the lingual side of the tooth, the length of one side of the slot, with square cross-sectional shape, ranges preferably from 0.3566 to 0.4826 mm (from 0.014 to 0.019 inches). The length of one side of the slot, with rectangle cross-sectional shape, ranges preferably from 0.3566 to 0.4826 mm (from 0.014 to 0.019 inches). With respect to the slot with rectangle cross-sectional shape, the ratio of the length of the short side to the length of the long side of the slot is preferably more than 1 and not more than 1.1. Further, it is more preferable when the ratio of the length of the short side to the length of the long side ranges from more than 1 to not more than 1.05.

In case when the orthodontic bracket is attached to the labial side of a tooth, the length of one side of the slot 35, with square cross-sectional shape, ranges preferably from 0.3810 to 0.5588 mm (from 0.015 to 0.022 inches). The length of one side of the slot, with rectangle cross-sectional shape, ranges preferably from 0.3810 to 0.5588 mm (from 0.015 to 0.022 inches). Further, with respect to the slot 35 with rectangle cross-sectional shape, the ratio of the length of the short side to the length of the long side of the slot 35 ranges preferably from more than 1 to not more than 1.1. Furthermore, it is more preferable when the ratio of the length of the short side to the length of the long side of the slot with rectangle cross-sectional shape ranges from more than 1 to not more than 1.05.

Since the cross-section of the slot 35 is a square shape or a rectangle shape within the predetermined range, the play between the orthodontic wire and the slot 35 can be suppressed small. Further, the rotation control, tipping control and torque control can securely be performed. In addition, the number of the orthodontic wire changed in the period from the primary stage to the terminal stage can be lessened.

The cross-sectional shape of the slot 35 does not need to be strict square or rectangle. For example, a corner of the square shape or the rectangle shape may be curved. Further, for example, a corner or one part of a side of the square shape or the rectangle shape may be shaved off. In other words, the cross-sectional shape of the slot 35 needs to be a shape that can securely suppress the play between the slot 35 and orthodontic wire small.

The play, which has been expressed in degrees, between the slot 35 and the orthodontic wire in rotation, tipping and torque is respectively defined as a rotation play, tipping play and torque play. It is preferable that the rotation play, the tipping play and the torque play are respectively not more than 5°. Further, it is more preferable when the rotation play, the tipping play and the torque play are independently and respectively not more than 3°. The rotation control, the tipping control and the torque control can be securely performed by respectively having the rotation play, tipping play and torque play within the predetermined range.

In case when the orthodontic bracket is attached to the lingual side of the tooth, the stiffness of the orthodontic wire is preferably not more than 1500. Further, it is more preferable when the stiffness of the orthodontic wire is not more than 1000.

In case when the orthodontic bracket is attached to the labial side of the tooth, the stiffness of the orthodontic wire is preferably not more than 2000. Further, it is more preferable that the stiffness of the orthodontic wire is not more than 1500. The optimum corrective force and moment can be realized without putting excessive force on a tooth by utilizing the orthodontic wire with the stiffness within the predetermined range. The stiffness refers to an index expressed by a ratio of the bending stiffness value of the target orthodontic wire to a reference value. Here, the reference value is the bending stiffness value of a stainless steel orthodontic wire having an elliptical cross-section of ϕ0.1016 mm (ϕ0.004).

In Fig. 1B, the centroid of the slot 35 with a square cross-sectional shape (or a rectangle cross-sectional shape) is defined as "center of the slot". A plane, which attaches to a tooth, of the pad 34 is defined as "bottom surface." A vertical line is drawn from the center C of the slot 35 to the bottom surface of the pad 34. Then the point where the vertical line and the bottom surface meet is defined to be D. The distance between C and D is defined as "distance between the center of the slot and the bottom surface of the pad."

In case when the orthodontic bracket is attached to the lingual side of the tooth, the distance between the center of the slot 35 and the bottom surface of the pad 34 ranges preferably from 0.5 to 1.5 mm. Further, it is more preferable that the distance between the center of the slot 35 and the bottom surface of pad 34 ranges from 0.5 to 1.0 mm. When the distance between the center of the slot 35 and the bottom surface of the pad 34 is within the above-mentioned range, a change in an in-out and a height of a tooth can be suppressed small in torque control. Further, the length of the orthodontic wire between adjacent brackets can be lengthened. Thus, the corrective force caused by the deformation of the orthodontic wire can be suppressed small. Further, since the excessive force on a tooth can be prevented, the comfort of the patient increases.

In case when the orthodontic bracket is attached to the labial side of a tooth, the distance between the center of the slot 35 and the bottom surface of the pad 34 ranges from 0.5 to 2.0 mm. Further, it is more preferable when the distance between the center of the slot 35 and the bottom surface of the pad 34 ranges from 0.5 to 1.5 mm. When the distance between the center of the slot 35 and the bottom surface of the pad 34 is within the above-mentioned range, a change in an in-out and a height of a tooth can be suppressed small in torque control.

In Fig. 1B, an edge point of the gingival side of the bottom surface of the pad 34 is defined as F. The distance between D and F is defined as "a vertical difference of the center of the slot 35 and the edge point of the gingiva side of the bottom surface of the pad."

In case when the orthodontic bracket is attached to the lingual side of the tooth, the vertical difference of the center of the slot 35 and the edge point of the gingival side of the bottom surface of the pad 34 ranges from 0.5 to 1.5 mm. Further, it is more preferable when the vertical difference between the center of the slot 35 and the edge point of the gingival side of the bottom surface of the pad 34 ranges from 0.5 to 1.0 mm. When the vertical difference between the center of the slot 35 and the edge point of the gingival side of the bottom surface of the pad 34 is within the above-mentioned range, a straight orthodontic wire having a simple and smooth circular arch and a straight line connected to both sides of the circular arch can be utilized. Further, the length of the orthodontic wire between the adjacent brackets can be lengthened. Thus, the corrective force caused by the deformation of the orthodontic wire can be suppressed. Furthermore, since the excessive force on a tooth can be prevented, the comfort of the patient is increased.

## Claims

1. An orthodontic bracket assembly, comprising:
a bracket (30) having a slot (35) through which an orthodontic wire can be placed,
a pad (34), onto which the bracket (30) including the slot (35) is attached,
wherein the slot (35) has been formed into a square cross-sectional shape or a rectangular cross-sectional shape having a short side and a long side,
wherein a ratio of the short side to the long side of the rectangular cross sectional shape ranges more than 1.0 to not more than 1.1,
wherein a length of the slot (35) ranges from about 1.0 to 3.0mm,
wherein a distance from a center of the slot (35) to a bottom surface of the pad (34) ranges from 0.5 to 1.5mm when the orthodontic bracket (30) is attachable to a lingual side of a tooth, and ranges from 0.5 to 2.0mm when the orthodontic bracket (30) is attachable to a labial side of a tooth, and
wherein a distance from a center (C) of the slot (35) to an edge point (F) of a gingival side of a bottom surface of the pad (34) in a vertical direction being the vertical difference, ranges from 0.5 to 1.5 mm.

## Patentansprüche

1. Orthodontische Klammeranordnung, umfassend:
eine Klammer (30), die über einen Schlitz (35) verfügt, durch den ein orthodontischer Draht angeordnet werden kann,
ein Pad (34), auf dem die Klammer (30) mit dem Schlitz (35) befestigt ist,
wobei der Schlitz (35) als eine quadratische Querschnittsform oder eine rechteckige Querschnittsform, die über eine kurze Seite und eine lange Seite verfügt, geformt worden ist,
wobei sich ein Verhältnis der kurzen Seite zu der langen Seite der rechteckigen Querschnittsform zwischen größer als 1,0 und nicht größer als 1,1 bewegt,
wobei sich eine Länge des Schlitzes (35) zwischen ungefähr 1,0 und 3,0 mm bewegt,
wobei sich eine Entfernung von einem Zentrum des Schlitzes (35) bis zu einer Bodenfläche des Pads (34) zwischen 0,5 und 1,5 mm bewegt, wenn die orthodontische Klammer (30) an einer lingualen Seite eines Zahns befestigt werden kann, und sich zwischen 0,5 und 2,0 mm bewegt, wenn die orthodontische Klammer (30) an einer labialen Seite eines Zahns befestigt werden kann, und
wobei sich eine Entfernung von einem Zentrum (C) des Schlitzes (35) zu einem Randpunkt (F) einer gingivalen Seite einer Bodenfläche des Pads (34) in einer vertikalen Richtung, die die vertikale Differenz ist, zwischen 0,5 und 1,5 mm bewegt.

## Revendications

1. Ensemble de support orthodontique comprenant :
un support (30) présentant une fente (35) à travers laquelle un fil orthodontique peut être placé,
un tampon (34) sur lequel le support (30) comprenant la fente (35) est attaché,
dans lequel la fente (35) a épousé une forme de coupe transversale carrée ou une forme de coupe transversale rectangulaire possédant un côté court et un côté long,
dans lequel un ratio du côté court sur le côté long de la forme de coupe transversale rectangulaire est compris dans une plage de valeurs supérieures à 1,0 mais n'excédant pas 1,1,
dans lequel une longueur de la fente (35) est comprise entre environ 1,0 et 3,0 mm,
dans lequel une distance entre un centre de la fente (35) et une surface inférieure du tampon (34) est comprise entre 0,5 et 1,5 mm lorsque le support orthodontique (30) peut être attaché à un côté lingual d'une dent, et est comprise entre 0,5 et 2,0 mm lorsque le support orthodontique (30) peut être attaché à un côté labial d'une dent, et
dans lequel une distance entre un centre (C) de la fente (35) et un point de bord (F) du côté gingival d'une surface inférieure du tampon (34) dans une direction verticale, étant la différence verticale, est comprise entre 0,5 et 1,5 mm.
